Europäisches Patentamt

European-Patent Office

Office européen des brevets

(11) Veröffentlichungsnummer: **0 324 401**
**A2**

(12) **EUROPÄISCHE PATENTANMELDUNG**

(21) Anmeldenummer: 89100239.6

(22) Anmeldetag: 07.01.89

(51) Int. Cl.⁴ **H01H 3/50 , H01C 10/14 , H02M 5/00**

(30) Priorität: 15.01.88 DE 3800956

(43) Veröffentlichungstag der Anmeldung:
19.07.89 Patentblatt 89/29

(84) Benannte Vertragsstaaten:
AT BE CH DE LI LU NL SE

(71) Anmelder: **Asea Brown Boveri
Aktiengesellschaft
Kallstadter Strasse 1
D-6800 Mannheim 31(DE)**

(72) Erfinder: **Hilburg, Jürgen
Käsbergstrasse 2
D-5800 Hagen 2(DE)**
Erfinder: **Vollmann, Detlef
Kapellenweg 5
D-5880 Lüdenscheid(DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1(DE)**

(54) **Elektrisches Schaltgerät.**

(57) Bekannte elektrische Schaltgeräte zur variablen Einstellung der Betriebsspannung besitzen Drehknöpfe die leicht beweglich ausgeführt sind. Hierdurch ist eine unbeabsichtigte, zufällige Verstellung infolge Verdrehens der Drehknöpfe bzw. der mit ihnen verbundenen Stellachse leicht möglich, was insbesondere beim Wiedereinschalten als nachteilig empfunden wird, wenn die ursprünglich eingestellte Helligkeit oder Drehzahl sich verändert.

Ein neuartiges elektrisches Schaltgerät (10, 30) besitzt eine mit der Stellachse (20, 33, 34) bzw. mit dem daran formschlüssig angesetzten Drehknopf (12, 31, 32) drehfest verbundenes erstes Rastelement (24, 40, 41), welches mit einem ortsfest angeordneten kreisringförmigen, konzentrisch die Stellachse (20, 33, 34) umfassenden zweiten Rastelement (28, 44, 45) zusammenarbeitet.

Der Einsatz der neuartigen Schaltgeräte (10, 30) ist insbesondere zur Helligkeits- und Drehzahlsteuerung mit Memory-Effekt vorgesehen.

Fig. 1

## Elektrisches Schaltgerät

Die Erfindung betrifft ein elektrisches Schaltgerät zur variablen Einstellung der Leistungsaufnahme von elektrischen Verbrauchern, insbesondere Dimmer und Drehzahlsteller, mit einer Abdeckung an seiner Frontseite, mit einem Schaltteil, das von einem durch Drehen einer Stellachse einstellbaren Steuerglied ansteuerbar ist, dessen Stellachse die frontseitige Abdeckung durchdringt und mit einem Drehknopf zumindest formschlüssig verbunden ist, sowie mit einem schalter, der durch axiales Verschieben der Stellachse betätigbar ist.

Die veränderbare Einstellung elektrischer Kennwerte, z. B. des Widerstandes eines Potentiometers, durch Verdrehen der Stellachse eines drehbaren Stellgliedes ist bekannt.

Ferner ist bekannt, elektrische Schaltgeräte zur variablen Einstellung der Leistungsaufnahme von elektrischen Verbrauchern, insbesondere von Lampen und von elektrischen Motoren, einzusetzen, die ein Schaltteil aufweisen, welches von einem Steuerglied ansteuerbar ist. Das Steuerglied ist häufig als Potentiometer ausgeführt, welches eine Stellachse besitzt, die mit einem verdrehbaren Abgriff verbunden ist, der sich an den die Stellachse konzentrisch umgebenden ringförmigen Widerstand des Potentiometers federnd anlegt.

Oftmals sind handelsübliche Potentiometer zusätzlich mit einem elektrischen Schalter kombiniert. Dieser kann gemäß einer verbreiteten Ausgestaltung durch Verdrehen der Stellachse betätigt werden.

Gemäß einer anderen Ausgestaltung ist vorgesehen, daß der Schalter als sog. Druckfolgeschalter ausgeführt ist und durch Niederdrücken des Drehknopfes an seiner Stellachse, d. h. durch axiale Verschiebung, betätigbar ist. Insbesondere die zuletzt angesprochene Variante findet häufig Verwendung in elektrischen Schaltgeräten, die als Dimmer oder als Drehzahlsteller zum Einsatz gelangen.

Beim Einsatz derartiger elektrischer Schaltgeräte wird es häufig als nachteilig empfunden, daß eine von den beiden möglichen Endstellungen abweichende Zwischenstellung nicht sicher reproduzierbar ist, wenn das elektrische Schaltgerät zwischenzeitlich ausgeschaltet wird. Oftmals wird aufgrund der leichtgängigen Drehbarkeit des Drehknopfes die ursprüngliche Einstellung unbeabsichtigt verändert, so daß eim Wiedereinschalten ein abweichender Helligkeitszustand bzw. eine abweichende Motordrehzahl resultiert.

Ausgehend vom vorstehend beschriebenen Stand der Technik ist es Aufgabe der Erfindung, ein elektrisches Schaltgerät der eingangs genannten Art zu schaffen, beim dem die jeweils gewählte Einstellung des Drehknopfes bzw. der Stellachse auch nach Betätigung des Schalters erhalten bleibt.

Die Lösung der Aufgabe ist erfindungsgemäß dadurch gekennzeichnet, daß ein erstes Rastelement drehfest mit der Stellachse verstellbar ist und ein zweites Rastelement ortsfest angeordnet ist, daß beide Rastelemente federnd miteinander zusammenarbeiten, und daß zur Veränderung der jeweiligen Einstellung der Stellachse eine den Rastwiderstand zwischen den beiden Rastelementen überschreitende Drehkraft erforderlich ist.

Gemäß einer bevorzugten Ausgestaltung der Erfindung ist vorgesehen, daß das erste Rastelement ein federnder Nokken ist, der mit dem auf die Stellachse formschlüssig angesetzten Drehknopf verbunden ist und in das zweite Rastelement eingreift, welches als Rasterung in einer zur Stellachse konzentrischen Ringfläche an der frontseitigen Abdeckung angeordnet ist.

Dabei versteht sich, daß der Drehknopf zur Bedienseite hin geschlossen ist und der als erstes Rastelement dienende federnde Nocken auf der Seite angeordnet ist auf der auch die Stellachse in den Drehknopf eingreift. Demgemäß ist die als zweites Rastelement dienende gerasterte Ringfläche auf der zum Drehknopf weisenden Seite der frontseitigen Abdeckung angeordnet.

Die Beaufschlagung des zweiten Rastelementes durch das erste erfolgt gemäß dieser zuvor beschriebenen Ausgestaltung in axialer Richtung, d. h. parallel zur Stellachse.

Die gerasterte Ringfläche ist hierbei aus nebeneinander in Kreibogen angeordneten Kugelkalotten gebildet.

Gemäß einer anderen Ausgestaltung kann statt desen auch eine durch radial orientierte Erhöhungen gebildete ringförmige Rastfläche vorgesehen sein.

Gemäß einer anderen vorteilhaften Ausgestaltung der Erfindung kann vorgesehen sein, daß das erste Rastelement mit dem Abgriff eines Potentiometers kombiniert ist, und daß in einer das Potentiometer umfänglich umgebenden zylindrischen Seitenwand eine ebenfalls ringförmig ausgebildete Rastfläche als zweites Rastelement angeordnet ist, in welche das erste Rastelement, das in Form einer Verlängerung des Abgriffs des Potentiometers ausgebildet ist und mit diesem einstückig radial an die Stellachse anschließt, eingreift.

Die erforderliche Federwirkung ist dadurch verbessert, daß der Abgriff eine gekrümmte Längsachse entsprechend einer Evolvente aufweist, so daß sich sein stärker gekrümmtes Ende, das mit der ringförmigen Rastfläche an der zylindrischen Außenwand des Potentiometers zusammenarbeitet aufgrund der durch die Form gegebenen Elastizität federnd an die Rastfläche anlegt.

In geeigneter Weiterbildung der Erfindung ist das erste Rastelement an seinem Ende, an dem es mit dem zweiten Rastelement zusammenarbeitet, mit einer kreisbogenförmigen Außenkontur versehen, mit der das erste Rastelement in das zweite Rastelement eingreift. Dabei ist vorgesehen, daß der Radius der kreisförmigen Außenkontur mit der Beaufschlagungsrichtung übereinstimmt.

Das mit dem ersten Rastelement korrespondierende zweite Rastelement, das wegen der Eindeutigkeit der Lagefixierung der Stellachse ortsfest angeordnet ist, kann als ringförmiges Zahnprofil mit spitzwinkligen oder sinusförmigen Zähen ausgebildet sein.

Eine vorteilhafte Variante der Ausgestaltung des zweiten Rastelementes besteht darin, daß es aus ringförmig nebeneinander angeordneten Mulden gebildet ist, deren Form der Kontur des ersten Rastelementes angepaßt ist.

Selbstverständlich ist bei der erfindungsgemäßen Ausgestaltung der miteinander zusammenarbeitenden Rastelemente darauf geachtet, daß die Außenabmessung des Rastelementes, welches in das andere Rastelement eingreift, dessen Abmessung nicht unterschreitet. Vorteilhafterweise sind die Außenabmessungen des für den Eingriff vorgesehenen Bereiches stets größer als die seines Gegenstükkes.

Abhängig von der Verstellempfindlichkeit der erfindungsgemäßen Rasteinrichtung ist die Größe der Rastelemente festzulegen. Demgemäß führt eine Vergrößerung der Rastelemente zwangsläufig zu einer Reduzierung der Anzahl der Zwischenstellungen zwischen den beiden Endstellungen der Stellachse bzw. des mit dieser verbundenen Drehknopfes aber gleichzeitig auch zu einer Erhöhung der zur Veränderung der Einstellung erforderlichen Stellkraft, da der Rastwiderstand aufgrund der größeren Rastflanken sich erhöht.

Vorteilhafterweise kann gemäß der Erfindung vorgesehen sein, daß die Rastelemente einstückig mit dem jeweiligen Teil, an welchem sie angeordnet sind, hergestellt werden.

Gemäß einer besonders vorteilhaften Ausgestaltung der Erfindung entsprechend der zweiten beschriebenen Ausführungsform kann die gewünschte Verrastung auch bei als Duodimmer bezeichneten elektrischen Schaltgeräten zur Anwendung gelangen. Bei derartigen Schaltgeräten sind zwei koaxial hintereinander angeordnete Steuerglieder vorgesehen, die als Drehpotentiometer ausgeführt sind und deren nach außen geführte Achsen unabhängig voneinander, indem eine die andere konzentrisch umfaßt, mittels verschiedener Drehknöpfe verstellbar sind.

Gemäß der Erfindung kann demgemäß sein, daß jeder Abgriff der beiden Drehpotentiometer eine Verlängerung aufweist, die als Rastelement dient und mit einem die Potentiometer umgebenden ringförmigen zweiten Rastelement zusammenarbeitet.

Diese und weitere vorteilhafte Ausgestaltungen und Weiterbildungen der Erfindung sind in den Unteransprüchen angegeben.

Anhand zweier in den Zeichnungen dargestellten Ausführungsbeispiele sollen die Erfindung, vorteilhafte Ausgestaltungen und besondere Vorteile der Erfindung näher erläutert und beschrieben werden.

Es zeigen:

Figur 1 Längsschnitt durch ein erfindungsgemäßes Schaltgerät mit in axialer Richtung arbeitenden Rastelementen,

Figur 2 Querschnitt entlang Schnittlinie I-I in Figur 1,

Figur 3 vergrößerte Darstellung des Ausschnittes A,

Figur 4 Längsschnitt durch ein Schaltgerät mit in radialer Richtung arbeitenden Rastelementen,

Figur 5 Vergrößerung des Ausschnittes A4 in Figur 4,

Figur 6 Querschnitt durch Figur 4 entlang Schnittlinie IV-IV,

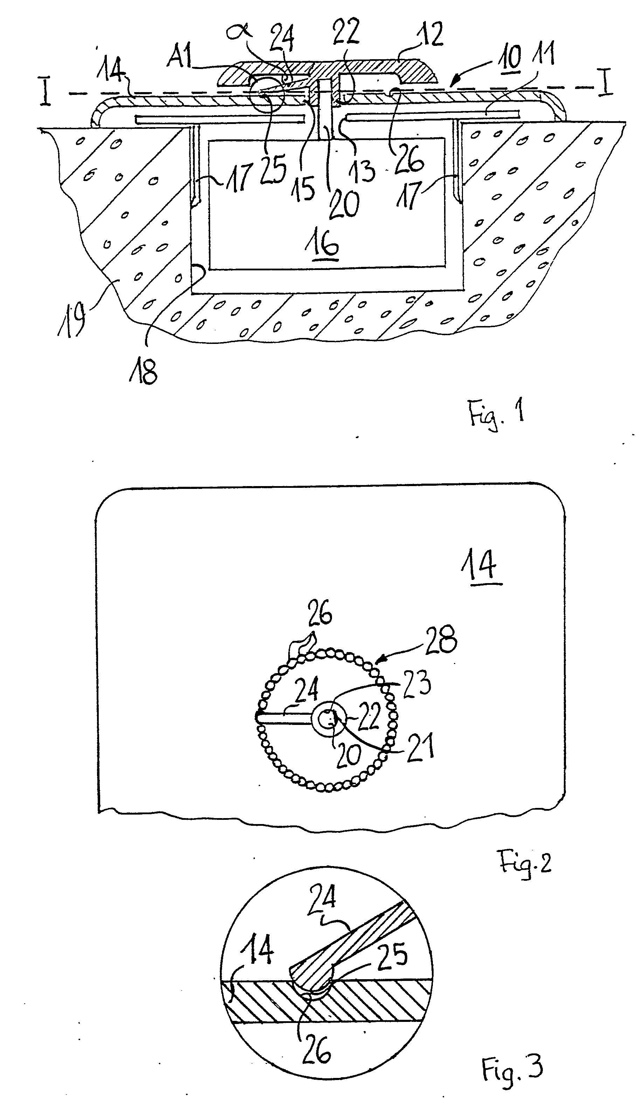

Figur 1 zeigt ein elektrisches Schaltgerät 10 mit einem Drehknopf 12, einer frontseitigen Abdeckkung 14 sowie einem Schalt- und Steuerteil 16, das in eine Ausnehmung 18 einer Wand 19 eingesetzt ist.

Ferner besitzt das elektrische Schaltgerät 10 eine Tragplatte 11, die mit der frontseitigen Abdeckkung 14 mittels nicht näher gezeigter Verbindungselemente verbunden ist. Außerdem sind an der Tragplatte 11, welche aus bekannte, hier nicht näher gezeigte Weise am Schaltgerät 10 befestigt ist, sog. Spreizen 17 angeordnet, welche das elektrische Schaltgerät 10 an der Innenseite der Ausnehmung 18 festklammern. Im Zentrum der Tragplatte 11 sowie der frontseitigen Abdeckung 14 ist jeweils eine Ausnehmung 13, 15 vorgesehen, die von einer Stellachse 20 durchgriffen ist, welche das elektrische Schalt- und Steuerteil 16 mit dem Drehknopf 12 verbindet.

Der Drehknopf 12 ist formschlüssig an die Stellachse 20 angesetzt und besitzt hierzu einen zum Schalt- und Steuerteil 16 gerichteten zylindrischen Ansatz 22.

An den zylindrischen ansatz 22 schließt eine Strebe 24 an, deren freies Ende axial in die gleiche Richtung wie der Ansatz 22 gerichtet ist, so daß zwischen der Strebe 24 und einer die Mittelachse des zylindrischen Ansatzes 22 schneidenden Ebene ein Winkel resultiert. Die Größe des Winkels ist abhängig von den Eigenschaften, insbesondere den Federungseigenschaften, des verwendeten Materials sowie von den Abmessungen der Strebe 24. Überlicherweise beträgt der Winkel zwischen 10° und 30°, vorzugsweise 15°.

Das solcher Art axial in Richtung der frontseitigen Abdeckung 14 gerichtete freie End der strebe 24 legt sich, wie insbesondere in Figur 3 erkennbar ist, an die frontseitige Abdeckung 14 an und beaufschlagt diese federnd. Auf diese Weise dient die Strebe 24 als erstes Rastelement, welches mit ihrem halbkugelförmig ausgebildeten freien Ende 25 jeweils in eine von vielen nebeneinander auf einem Kreisring angeordneten in die frontseitige Abdeckung 14 eingeformten Kugelkalotten 26 eingreift, wie es insbesondere aus Figur 3 deutlich ersichtlich ist.

Die Abmessungen des kugelförmigen freien Endes 25 der Strebe 24 sind dabei stets höchstens so groß wie die der Kalotte 26, vorzugsweise jedoch größer, um auf diese Weise eine definierte Anlage zwischen dem Rand der Kugelkalotte 26 und dem freien Ende 25 der Strebe 24 zu erhalten.

Beim Verdrehen des Drehknopfes 12, wobei sich dessen Drehbewegung auf die Stellachse 20 überträgt und so zu einer veränderten Einstellung des Schalt- und Steuergerätes 16 führt, gleitet die Strebe 24 mit ihrem freien Ende 25 über den aus Kalotten 26 gebildeten Kreisring 28, wie insbesondere in Figur 2 erkennbar ist. Hierbei ist eine Drehkraft aufzuwenden, die zusätzlich zu der für die Verstellung des in dem Schalt- und Steuergerät 16 befindlichen Steuergliedes benötigt wird. Auf diese Weise ist sichergestellt, daß ein unbeabsichtigtes zufälliges Verdrehen des Drehknopfes 12 und damit eine Änderung der Einstellung des Schalt- und Steuergerätes 16 praktisch ausgeschlossen ist, da durch die federnde Anlage des freien Endes 25 in den Kalotten 26 ein ausreichend großer Rastwiderstand gebildet ist, der einer zufälligen Betätigung des Drehknopfes 12 entgegenwirkt.

Zur drehfesten Verbindung zwischen dem Drehknopf 12 und der Stellachse 20, die formschlüssig vorgesehen ist, ist die Stellachse 20 mit einer Abflachung 21 versehen, die durch eine entsprechenden Ansatz in der Aufnahmebohrung 23 des zylindrischen Ansatzes 22 am Drehknopf 12 beaufschlagt wird.

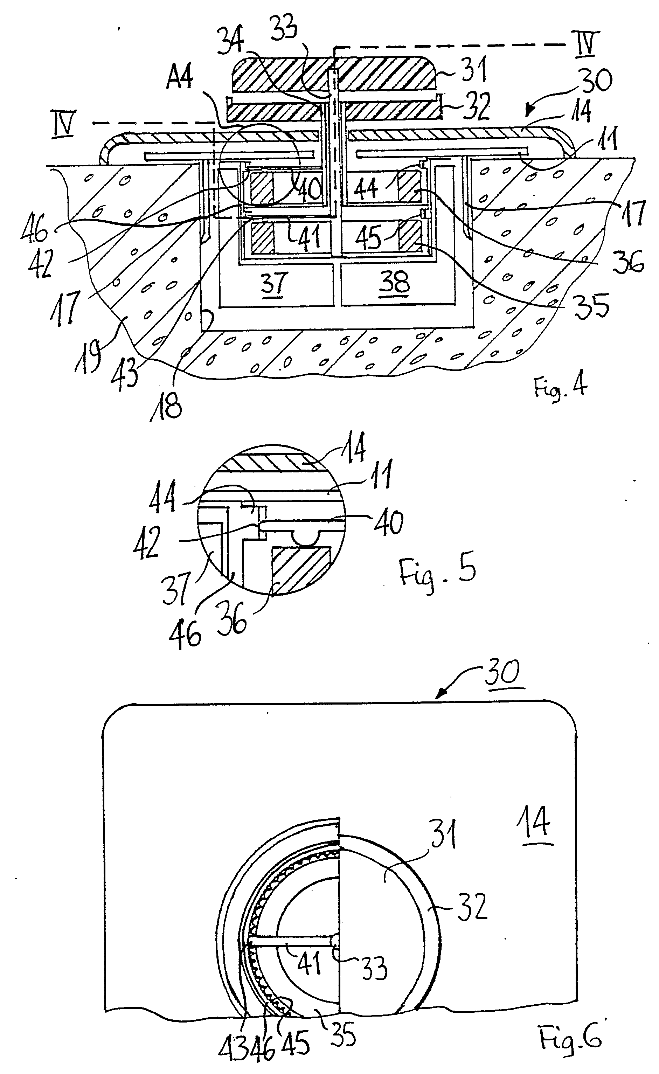

In den Figuren 4 bis 6 ist eine andere Ausgestaltung der Erfindung dargestellt. Es handelt sich hierbei ebenfalls um ein elektrisches Schaltgerät 30, welches jedoch mit zwei Drehknöpfen 31, 32 versehen ist, die jeweils mit verschiedenen Stellachsen 33, 34 verbunden sind, die zu den beiden hier als Drehpotentiometer ausgebildeten Steuergliedern 35, 36 des zwei Schalterpole 37, 38 besitzenden Schaltgerätes 30 geführt sind. Ferner besitzt das elektrische Schaltgerät 30 wie auch zuvor bereits das Schaltgerät 10 ebenfalls eine frontseitige Abdeckung 14 sowie eine Tragplatte 11 mit daran befindlichen Spreizen 17, die sich an der Innenfläche des ebenfalls in eine Ausnehmung 18 in einer Wand 19 eingebauten Schaltgerätes 30 festklammern.

Auch bei dem elektrischen Schaltgerät 30 ist vorgesehen, die zufällige Verdrehung der Drehknöpfe 31, 32 durch entsprechende Rastelemente zu verhindern. Bei der in Figur 4 gezeigten Ausgestaltung ist vorgesehen, als erstes, drehbewegliches Rastelement jeweils den als Abgriff dienenden Schleifarm 40, 41 entsprechend zu verlängern, so daß sein freies Ende, welches ebenfalls mit einem Radius versehen ist ähnlich einer Halbkugel. Mit diesem freien Ende 42, 43 rastet der abgriff 40, 41, der mit der zugeordneten Stellachse 33. 34 jeweils drehfest verbunden ist, radial in den am Umfang angeordneten kreisringförmigen Rastkranz 44, 45 ein, dessen aus nebeneinander auf einer Kreisbahn angeordneten halbzylindrischen Einformungen gebildeten Ausgestaltung aus Figur 6 ersichtlich ist.

In Figur 5 ist eine ausschnittweise Vergrößerung des Ausschnittes A4 in Figur 4 dargestellt, um die besondere Ausgestaltung der Verrastung zwischen dem freien Ende 42 des Abgriffes 40 sowie dem Rastkranz 44 zu zeigen, der an einer das Potentiometer 36 umgebenden Seitenwand 46 angeformt ist.

Die in Figur 6 gezeigte Darstellung zeigt die teilweise Draufsicht sowie den Schnitt durch das in Figur 4 gezeigte Schaltgerät 30. Die angegebenen Bezugsziffern bezeichnen die gleichen Teile, die bereits in Figur 4 erläutert wurden.

Abweichend von dem in Figur 6 gezeigten radial an die Stellachse 33 anschließenden Abgriff 41 kann diese auch evolventenartig gekrümmt sein, um auf diese Weise eine höhere Federwirkung im Hinblick auf die Verrastung mit dem Rastkranz 45 zu erzielen.

Nicht näher dargestellt worden ist für beide elektrische Schaltgeräte 10 und 30 die elektrische Verdrahtung. Ebenso nicht gezeigt ist der jeweils vorgesehene elektrische Schalter, dessen Betätigung durch Niederdrücken des jeweiligen Drehknopfes 12, 31, 32 erfolgt, wobei sich dessen Betätigung auf die zugeordnete Stellachse 20, 33, 34 überträgt. Derartige Schalter sind im Stand der Technik bekannt, so daß auf deren Darstellung im Ausführungsbeispiel verzichtet wurde.

## Ansprüche

1. Elektrisches Schaltgerät zur variablen Einstellung der Leistungsaufnahme von elektrischen Verbrauchern, insbesondere Dimmer und Drehzahlsteller, mit einer Abdeckung an seiner Frontseite, mit einem Schaltteil, das von einem durch Verdrehen einer Stellachse einstellbaren Steuergleid ansteuerbar ist, dessen Stellachse die frontseitige Abdeckung durchdringt und mit einem Drehknopf formschlüssig verbunden ist, sowie mit einem Schalter, der durch axiales Verschieben der Stellachse betätigbar ist, dadurch gekennzeichnet, daß ein erstes Rastelement (24, 40, 41) drehfest mit der Stellachse (20, 33, 34) verstellbar ist, daß ein zweites Rastelement (28, 44, 45) ortsfest angeordnet ist und daß beide Rastelemente (24, 40, 41, 28, 44, 45) federnd miteinander zusammenarbeiten, wobei zur Veränderung der jeweiligen Einstellung der Stellachse (20, 33, 34) eine Drehkraft erforderlich ist, die den zwischen den ersten und zweiten Rastelementen (24, 40, 41, 28, 44, 45) wirksamen Rastwiderstand überschreitet.

2. Elektrisches Schaltgerät nach Anspruch 1, dadurch gekennzeichnet, daß das erste Rastelement (24, 40, 41) ein mit dem zugeordneten Drehknopf (12, 31, 32) fest verbundener federnder Nokken ist, der in das ringförmige, konzentrisch zur Stellachse (20, 33, 34) angeordnete zweite Rastelement (28, 44, 45) eingreift.

3. Elektrisches Schaltgerät nach Anspruch 1 oder 2, dadurch gekennzeichnet, daß das zweite Rastelement (28) als kreisringförmige Rasterung in der frontseitigen Abdeckung (14) des Schaltgerätes (10) eingeformt ist.

4. Elektrisches Schaltgerät nach Anspruch 3, dadurch gekennzeichnet, daß das zweite Rastelement (28) aus nebeneinander angeordneten Kugelkalotten (26) gebildet ist.

5. Elektrisches Schaltgerät nach Anspruch 3, dadurch gekennzeichnet, daß das zweite Rastelement (28) als radiale, kegelrollenförmige Mulden in der frontseitigen Abdeckung (14) auf einem Kreisring eingeformt ist.

6. Elektrisches Schaltgerät nach Anspruch 1, dadurch gekennzeichnet, daß als erstes Rastelement (40, 41) ein Abgriff eines als Steuerglied für das Schalt-und Steuerteil (37, 38) des elektrischen Schaltgerätes (30) eingesetztes Drehpotentiometer (35, 36) vorgesehen ist, welches mit einem als zweitem Rastelement (44, 45) dienenden Rastkranz zusammenarbeitet welcher das Drehpotentiometer (35, 36) umfänglich umgibt.

7. Elektrisches Schaltgerät nach Anspruch 6, dadurch gekennzeichnet, daß der Rastkranz (44, 45) mit einer das Potentiometer umgebenden zylindrischen Wand (46) verbunden ist.

8. Elektrisches Schaltgerät nach einem der Ansprüche 6 oder 7, dadurch gekennzeichnet, daß zwei Potentiometer (35, 36) axial hintereinander angeordnet sind, deren Abgriffe (40, 41) mit der ihnen zugeordneten Stellachse (33, 34) fest verbunden sind und jeweils als erstes Rastelement dienend mit jeweils einem als zweites Rastelement (44, 45) dienenden Rastkranz, der das zugeordnete Potentiometer (35, 36) ringförmig umfaßt, zusammenarbeitet, wobei die beiden koaxial nach außen geführten Stellachsen (33, 34) jeweils mit verschiedenen Drehknöpfen (31, 32) zu ihrer Betätigung verbunden sind.

EP 0 324 401 A2

Fig. 1

Fig. 2

Fig. 3

Fig. 4

Fig. 5

Fig. 6